# EUROPÄISCHE PATENTANMELDUNG

(11) **EP 3 228 169 A1**
(43) Veröffentlichungstag der Anmeldung: **11.10.2017**
(21) Anmeldenummer: 17401031.4
(22) Anmeldetag: 31.03.2017
(51) Int. Cl.: A01C 7/20, A01C 5/06

(54) **SÄSCHAR**

(30) Priorität: 05.04.2016 DE 102016106146
(71) Anmelder: Amazonen-Werke H. Dreyer GmbH & Co. KG, 49205 Hasbergen (DE)
(72) Erfinder: Mertens, Daniel, 26121 Oldenburg (DE); Westermann, Andre, 27777 Ganderkesee (DE); Bohlen, Eike, 28215 Bremen (DE)

(57) **Zusammenfassung**

Säschar (3,7) mit zumindest einem an einem Scharhalter (2) angeordneten Furchenöffnungselement (8) und hinter dem Furchenöffnungselement angeordneter Saatgutzuführungsleitung (6) und nach- und zugeordneter Saatgutfang- und/oder Saatgutandruckrolle (11), wobei die nach- und zugeordnete Saatgutfang- und/oder Saatgutandruckrolle an dem Scharhalter in lösbarer und/oder wegschwenkbarer Weise angeordneten Halteelement (19) angeordnet sind. Um die Saatgutfang- und/oder Saatgutandruckrolle an dem Scharhalter mittels des Halteelementes an dem Scharhalter gegenüber der an dem Scharhalter angeordneten Saatgutzuführungsleitung in lösbarer und/oder wegschwenkbarer Weise anzuordnen, ist vorgesehen, dass die Saatgutfang- und/oder Saatgutandruckrolle an dem Scharhalter mittels des Halteelementes an dem Scharhalter gegenüber der an dem Scharhalter angeordneten Saatgutzuführungsleitung in lösbarer und/oder wegschwenkbarer Weise angeordnet ist.

## Beschreibung

Die Erfindung betrifft ein Säschar gemäß des Oberbegriffes des Patentanspruches 1.

Ein derartiges Säschar ist in EP 2 022 307 B1 beschrieben. Dieses Säschar weist zumindest ein an einem Scharhalter angeordnetes Furchenöffnungselement in Form von zwei V-förmig zueinander angestellten Scharscheiben eines Doppelscheibenschares auf. Zwischen diesen Scharscheiben und somit hinter dem die Furchen öffnenden Element ist eine Saatgutzuführungsleitung mit nach- und zugeordneter Saatgutfang- und/oder Saatgutandruckrolle angeordnet. Die Scharscheiben und die nach- und zugeordnete Saatgutfang- und/oder Saatgutandruckrolle sind an dem Scharhalter gemeinsam über ein Halteelement in lösbarer und/oder wegschwenkbarer Weise angeordnet. Diese Anordnung hat sich grundsätzlich in der Praxis zur Reinigung und zur Verstopfungsbeseitigung bewährt, wenn sich Bodenteile und Pflanzenreste zwischen der Saatgutzuführungsleitung und den vorderen Innenseiten der V-förmig zueinander angestellten Scharscheiben gesetzt haben. Um jedoch den sich häufiger zur Verstopfung neigenden Bereich zwischen der Saatgutzuführungsleitung und nach- und zugeordneter Saatgutfang- und/oder Saatgutandruckrolle reinigen und die Verstopfung beseitigen zu können, ist diese bekannte schwere Anordnung nur mit Mühe zu verschwenken.

Der Erfindung liegt die Aufgabe zugrunde, eine verbesserte und erleichterte Reinigung des Bereiches zwischen der Saatgutzuführungsleitung mit zugeordnetem Furchenformer und der nach- und zugeordneten Saatgutfang- und/oder Saatgutandruckrolle zu schaffen.

Diese Aufgabe wird erfindungsgemäß dadurch gelöst, dass die Saatgutfang- und/oder Saatgutandruckrolle an dem Scharhalter mittels des Halteelementes an dem Scharhalter gegenüber der an dem Scharhalter angeordneten Saatgutzuführungsleitung in lösbarer und/oder wegschwenkbarer Weise angeordnet ist.

Infolge dieser Maßnahme wird die Masse und/oder das Gewicht der zu verschwenkenden Bauteile erheblich verringert. Weiterhin wird der verstopfte und zu reinigende Bereich zwischen der Saatgutzuführungsleitung mit zugeordnetem Furchenformer und der nach- und zugeordneten Saatgutfang- und/oder Saatgutandruckrolle auseinander gezogen, so dass der zu reinigende Bereich frei von hinten ungehindert zugänglich ist.

Bei einem Säschar, bei dem an dem Halterelement in nachgeordneter Weise hinter der Saatgutfang- und/oder Saatgutandruckrolle zumindest eine Bodenandruckrolle angeordnet ist, ist vorgesehen, dass die Saatgutfang- und/oder Saatgutandruckrolle und die zumindest eine Bodenandruckrolle gemeinsam gegenüber der Saatgutzuführungsleitung in lösbarer und/oder wegschwenkbarer Weise angeordnet sind. Hierdurch werden auch bei dieser Ausstattungsvariante alle Bauteile hinter dem zu reinigenden Bereich hoch geschwenkt, so dass der zu reinigende Bereich frei von hinten ungehindert zugänglich ist.

Um den zu reinigenden Bereich bequem und sicher reinigen zu können, ist vorgesehen, dass die Saatgutfang- und/oder Saatgutandruckrolle und/oder die zumindest eine Bodenandruckrolle gemeinsam gegenüber der Saatgutzuführungsleitung in hochgeschwenkter Position mittels geeigneter Mittel festsetzbar sind.

Weitere Einzelheiten der Erfindung sind der Beispielsbeschreibung und den Zeichnungen zu entnehmen. Die Zeichnungen zeigen
- Fig.1: ein Einzelkornsäaggregat mit dem erfindungsgemäßen als Doppelscheibenschar ausgebildeten Säschar in Arbeitsstellung und in Seitenansicht,
- Fig.2: ein Einzelkornsäaggregat mit dem erfindungsgemäßen Säschar in Arbeitsstellung und in Seitenansicht nach Fig.1, jedoch mit nicht dargestelltem Tiefenführungsrad und Scharscheibe auf der in Fahrtrichtung linken Seite des Doppelscheibenschares,
- Fig.3: das Doppelscheibenschar mit zugeordneter Saatgutzuführungsleitung und Saatgutfangrolle in der Ansicht gemäß Fig.2, jedoch in Teilansicht und vergrößertem Maßstab,

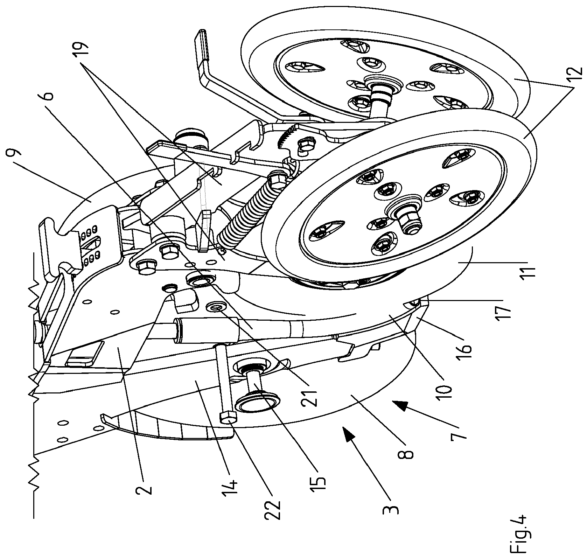

- Fig.4: das Doppelscheibenschar mit zugeordneter Saatgutzuführungsleitung und Saatgutfangrolle in der Ansicht gemäß Fig.2, jedoch vergrößertem Maßstab,
- Fig.5: ein Einzelkornsäaggregat mit dem erfindungsgemäßen als Doppelscheibenschar ausgebildeten Säschar in angehobener Stellung von Saatgutfangrolle und Saazgutandruckrolle gegenüber den Scharscheiben und der Saatgutzuführungsleitung in Seitenansicht,
- Fig.6: ein Einzelkornsäaggregat mit dem erfindungsgemäßen Säschar in Seitenansicht in der Position nach Fig.5, jedoch mit nicht dargestelltem Tiefenführungsrad und Scharscheibe auf der in Fahrtrichtung linken Seite des Doppelscheibenschares,
- Fig.7: das Doppelscheibenschar mit zugeordneter Saatgutzuführungsleitung und Saatgutfangrolle in der Ansicht und Position gemäß Fig.6, jedoch in Teilansicht und vergrößertem Maßstab.

Das Einzelkornsäaggregat 1 weist einen Rahmen 2 auf, der in bekannter und daher nicht dargestellter Weise an einem Querbalken der als Einzelkornsämaschine ausgebildeten Sämaschine zu befestigen ist. In bekannter Weise sind mehrere Einzelkornsäaggregate 1 beabstandet nebeneinander an dem Querbalken angeordnet. An dem Rahmen 2 des Einzelkornsäaggregates 1 ist die Schareinheit 3, die Vereinzelungsvorrichtung 4 und der Saatgutbehälter 5 angeordnet. Zwischen der Vereinzelungsvorrichtung 4 und der als Schareinheit 3 ausgebildeten Abgabe- und/oder Ablageeinrichtung ist die Saatgutzuführungsleitung 6 angeordnet.

Die Schareinheit 3 weist das als Doppelscheibenschar 7 ausgebildete Säschar mit den beiden V-förmig zueinander angestellten, frei drehbar gelagerten Scharscheiben 8 und den jeweils auf den Außenseiten der Scharscheiben 8 in bekannter Weise in Höhenrichtung zu den Scharscheiben 8 verstellbaren, frei drehbar gelagerten Tiefenführungsrädern 9, das Ende 10 der Saatgutzuführungsleitung 6, die nachgeordnete Saatgutfang- und/oder Saatgutandruckrolle 11 und die V-förmig zueinander angestellten Bodenandruckrollen 12 auf. Die V-förmig zueinander angestellten Scharscheiben 8 bilden das Furchenöffnungselement und schaffen bei der Vorwärtsbewegung in Pfeilrichtung 13 durch den Boden eine Säfurche, in welcher das über das Ende 10 der Saatgutzuführungsleitung 6 zugeführte und von der Vereinzelungseinrichtung 4 vereinzelte Saatgut in bekannter Weise abgelegt wird. Das aus dem Ende 10 der Saatgutzuführungsleitung 6 austretende Saatkorn wird von der Saatgutfang- und/oder Saatgutandruckrolle 11 aufgefangen und gegen den Boden in der Säfurche gedrückt und anschließend nach dem Bedecken des Saatkornes mit Bodenteilen durch die Bodenandruckrollen 12 in bekannter Weise angedrückt.

Die V-förmig zueinander angestellten Scharscheiben 8 sind über den an dem Rahmen 2 angeordneten und nach schräg hinten ragenden Haltearm 14 mittels einer Drehlagerung 15 frei drehbar gelagert. Der Haltearm 14 ist nach unten über die Drehlagerung 15 verlängert und trägt an seinem unteren Ende den Furchenformer 16. An dem Furchenformer 16 bzw. dem unteren Ende des Haltearmes 14 ist das Ende 10 der Saatgutzuführungsleitung 6 befestigt. Die Mündungsöffnung 17 des Endes 10 der Saatgutzuführungsleitung 6 ist nach hinten in Richtung der nachgeordneten Saatgutfang- und/oder Saatgutandruckrolle 11 gerichtet.

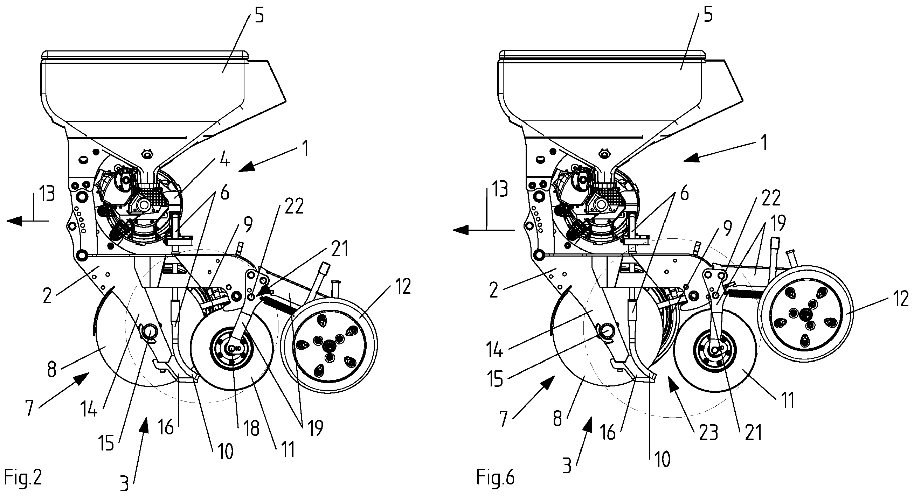

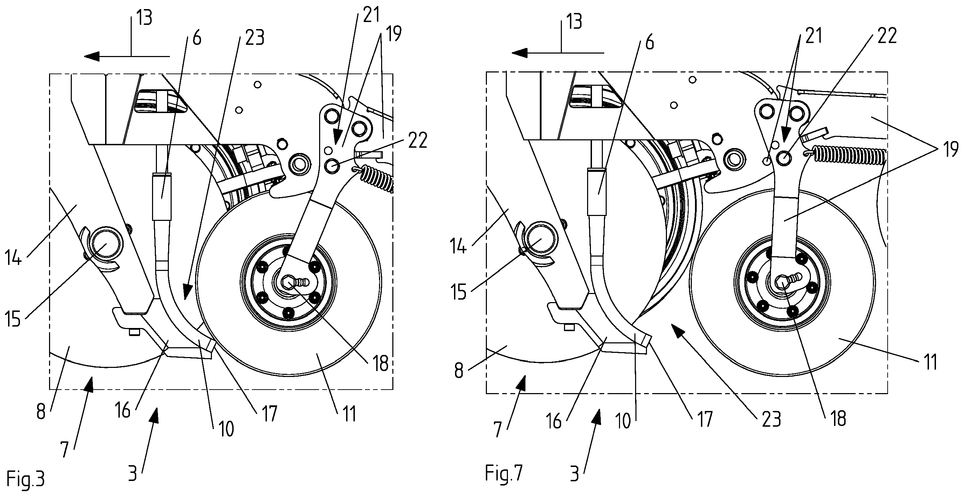

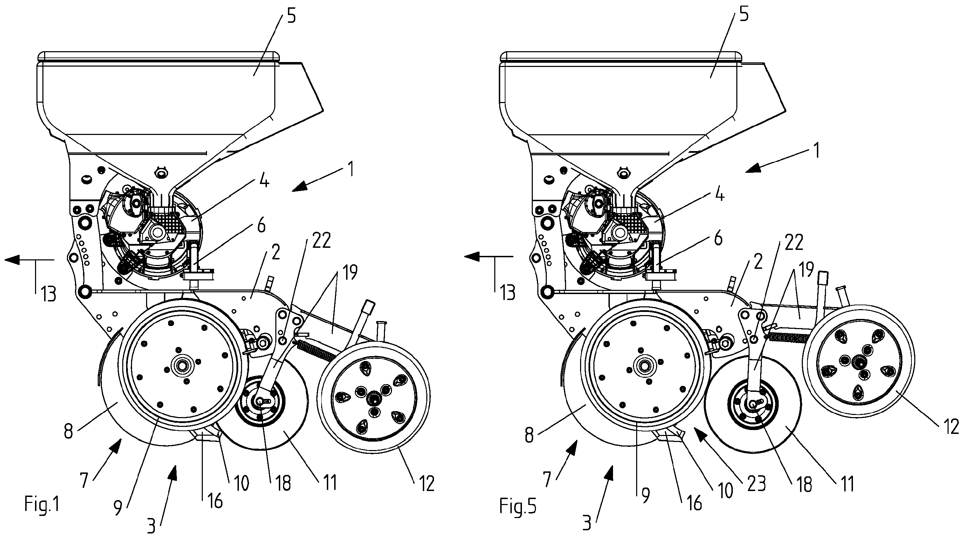

Die Saatgutfangrolle 11 ist mittels einer Drehlagerung 18 frei drehbar an einem Halteelement 19 angeordnet. An diesem Halteelement 19 sind auch die Saatgutandruckrollen 12 mittels einer Drehlagerung frei drehbar angeordnet. Das Halteelement 19 mit der Saatgutfangrolle 11 und den Bodenandruckrollen 12 ist an dem Rahmen 2, der den Scharhalter bildet, mittels einer Schwenkhalterung 20 an dem Scharhalter 2 in lösbarer und/oder wegschwenkbarer Weise gegenüber der an dem Scharhalter angeordneten Saatgutzuführungsleitung 6 angeordnet. Um das Halteelement 19 gegenüber dem Scharhalter 2 in Arbeitsposition gemäß den Fig.1 bis 3 zu fixieren, ist durch korrespondierende Bohrungen 21 in dem Scharhalter 2 und dem Halteelement 19 der Sicherungsbolzen 22 gesteckt.

Im Ausführungsbeispiel sind die Saatgutfang- und/oder Saatgutandruckrolle 11 und die Bodenandruckrollen 12 gemeinsam gegenüber der Saatgutzuführungsleitung 6 in lösbarer und/oder wegschwenkbarer Weise angeordnet wird.

Nach dem Entfernen des Sicherungsbolzens 22 aus den Bohrungen 21 kann das Halteelement 19 mit den daran angeordneten Saatgutfang- und/oder Saatgutandruck- 11 und Bodenandruckrollen 12 aus der in den Fig.1 bis 3 dargestellten Arbeitsposition in die in den Fig. 5 bis 7 dargestellten angehobene Reinigungsposition verschwenkt und angehoben werden. In dieser Position lässt sich zum sicheren Reinigen das Halteelement 19 mit den Saatgutfang- und/oder Saatgutandruck- 11 und Bodenandruckrollen 12 gemeinsam gegenüber der Saatgutzuführungsleitung 6 in hochgeschwenkter Position mittels des Sicherungsbolzens 22 festsetzen und sichern, wie dies in den Fig. 5 bis 7 gezeigt ist. In nicht dargestellter Weise kann erforderlichenfalls das Halteelement 19 mit den Saatgutfang- und/oder Saatgutandruck- 11 und Bodenandruckrollen 12 auch noch weiter angehoben und in dieser höher angehobenen Position entsprechend festgesetzt werden.

Nach dem Anheben zur Schaffung einer Zugänglichkeit in den Zwischenraum 23 zwischen dem Ende 10 der Saatgutzuführungsleitung 6 und der Vorderseite der Saatgutfang- und/oder Saatgutandruckrolle 11, in dem die Saatgutfang- und/oder Saatgutandruckrolle 11 von dem Ende der Saatgutzuführungsleitung entfernt wird, lässt sich der Bereich zwischen dem Ende 10 der Saatgutzuführungsleitung 6 und der Vorderseite der Saatgutfang- und/oder Saatgutandruckrolle 11 zum Entfernen von Bodenteilen und Pflanzenresten, also zur Beseitigung von Verstopfungen in diesem Bereich, ausreichend gut und bequem zu erreichen.

## Patentansprüche

1. Säschar (3, 7) mit zumindest einem an einem Scharhalter (2) angeordneten Furchenöffnungselement (8) und hinter dem Furchenöffnungselement (8) angeordneter Saatgutzuführungsleitung (6) und nach- und zugeordneter Saatgutfang- und/oder Saatgutandruckrolle (11), wobei die nach- und zugeordnete Saatgutfang- und/oder Saatgutandruckrolle (11) an dem Scharhalter (2) in lösbarer und/oder wegschwenkbarer Weise angeordneten Halteelement (19)angeordnet sind, **dadurch gekennzeichnet, dass** die Saatgutfang- und/oder Saatgutandruckrolle (11) an dem Scharhalter (2) mittels des Halteelementes an dem Scharhalter (2) gegenüber der an dem Scharhalter (2) angeordneten Saatgutzuführungsleitung (6) in lösbarer und/oder wegschwenkbarer Weise angeordnet ist.

2. Säschar nach Anspruch 1, wobei an dem Halterelement (19) in nachgeordneter Weise hinter der Saatgutfang- und/oder Saatgutandruckrolle (11) zumindest eine Bodenandruckrolle, **dadurch gekennzeichnet, dass** die Saatgutfang- und/oder Saatgutandruckrolle (11) und die zumindest eine Bodenandruckrolle (12) gemeinsam gegenüber der Saatgutzuführungsleitung (6) in lösbarer und/oder wegschwenkbarer Weise angeordnet sind.

3. Säschar nach zumindest einem der vorstehenden Ansprüche, **dadurch gekennzeichnet, dass** die Saatgutfang- und/oder Saatgutandruckrolle (11) und/oder die zumindest eine Bodenandruckrolle (12) gemeinsam gegenüber der Saatgutzuführungsleitung (6) in hochgeschwenkter Position mittels geeigneter Mittel (22) festsetzbar sind.
